# EUROPEAN PATENT APPLICATION

(11) **EP 4 462 331 A1**
(43) Date of publication of application: **13.11.2024**
(21) Application number: 23172160.6
(22) Date of filing: 08.05.2023
(51) Int. Cl.: G06Q 20/04, G06Q 20/20

(54) **SYSTEM AND METHOD FOR ANONYMOUS TRANSMISSION OF DIGITIZED RECEIPTS**

(71) Applicant: CGI Deutschland B.V. & Co. KG, 70771 Leinfelden-Echterdingen (DE)
(72) Inventor: Keller, Thomas, 65843 Sulzbach (Taunus) (DE)
(74) Representative: Betten & Resch

(57) **Abstract**

A digital receipt generation and transmission system and method including a cashier system, a receipt cloud application of a receipt cloud application server, a receipt cloud storage, a terminal, and a transaction processing network is shown. The cashier system is configured to generate a digital receipt upon recording transaction-relevant information from selected items of a merchant, establish a connection with the receipt cloud application, and transmit a request for a unique link for the digital receipt. The cashier system then receives the unique link, generates a transaction data set according to a cash register protocol, incorporates the unique link into the transaction data set, and transmits the formatted transaction data set to the terminal. Upon receiving a transaction confirmation from the terminal after successful processing by the transaction processing network, the cashier system transmits the digital receipt to the receipt cloud application. The receipt cloud application is configured to receive the request for the unique link, generate the unique link based on a calculated individual hash value, transmit the unique link to the cashier system, receive the digital receipt if the transaction is successful, and store the digital receipt in the receipt cloud storage. The terminal is configured to transmit the transaction data set to the transaction processing network and transmit the transaction confirmation to the cashier system. The transaction processing network is configured to receive the transaction data set, process it, and make the unique link available to a user, enabling access to the digital receipt stored in the receipt cloud storage via the unique link.

## Description

### TECHNICAL FIELD

The present disclosure is related to a digital receipt transmission system, a respective computer-implemented method, a respective computer program, and respective computer program product providing secure and anonymous generation and transmission of digital receipts based on a cloud-based infrastructure ensuring enhanced privacy and data protection in retail and e-commerce transactions.

### BACKGROUND

In numerous states, merchants are mandated to document purchases via receipts for users. This obligation exists for merchants and in some states also for users to issue and retain receipts as transaction records. Consequently, even for minor retail transactions, merchants generate receipts to comply with legal obligations. This leads to a situation, where even for the smallest retail transactions worth a few cents, e.g. in a bakery store, merchants produce receipts to be compliant with the legal obligations.

The existing market standard for issuing receipts for cash and non-cash payments is paper receipts. In reality, legislation generates considerable demand for paper receipt rolls, their utilization, and disposal to fulfill legal requirements.

Predominantly, paper receipts are issued on thermal paper, which, due to its properties, releases CO₂ during production and creates residual waste due to its non-recyclable nature. Additionally, thermal paper fades over time, rendering it unsuitable for long-term archiving. Consequently, the mandatory fulfillment of the receipt requirement incurs costs for trade, the environment, and society. To reach CO₂ neutrality by 2050, it is crucial to establish digital alternatives for individual payment transaction receipts in the mass market.

Methods of transmitting receipts "digitally", such as QR-Code or Apps, have not yet been successful in the mass market and do not meet all requirements of market participants in terms of speed, comfort, privacy and accessibility.

In order to digitally transmit a receipt from a merchant to a user, currently, two methods can be distinguished in the market.
(1) Digital availability via QR code: Transmission via QR code involves the merchant digitizing the receipt after the transaction and transferring it to an online accessible storage location. The online location is made accessible to the user using a QR code, e.g., via a screen at the checkout. The user scans the QR code with their smartphone camera, and with the appropriate mobile connection and technological prerequisites, they receive their digital receipt on their mobile phone via the QR code.
   Challenges of this procedure include low availability for users and additional cost burdens for merchants by providing additional hardware (e.g., screen and smartphone). The lack of convenience due to a manual process for the user and the long duration of the process make it unsuitable for strict time requirements at checkouts (especially in food retail and at petrol stations). Further technical disadvantages include limited compatibility, as not all devices can scan QR codes, and reliance on internet connectivity, which might not always be available. Increased power consumption due to the use of cameras and screens, as well as the need for regular software maintenance and updates to ensure compatibility and security, add to the disadvantages.
(2) Digital availability via loyalty programs/smartphone apps: Some merchants offer to transmit receipts digitally to the user within certain smartphone apps, often combined with loyalty programs. This method requires the user to register for the respective program or app and consent to the provider's general terms and conditions, data storage, and de-anonymization at the checkout. If registered, users can identify themselves during the checkout in a store of participating merchants and receive a digital receipt via this program.

Challenges of this procedure include market fragmentation, as there is no uniform procedure for all merchants in the market, and the commercial nature of these programs, which often associates participation with the use and evaluation of personal data of the user, as well as direct marketing activities and advertisements. Further technical disadvantages include a steep learning curve for users unfamiliar with the apps, privacy concerns arising from data collection and de-anonymization, and accessibility disparities due to the digital divide.

In conclusion, the currently available methods for digital receipt transmission do not fully consider the convenience for users and merchants, as they either require registration, data storage, and processing or de-anonymization of the user. So far, no solution on the market has reached a significant number of users in the mass market, and there is no generic standard solution in place. Users need to register in many different applications separately for different merchants, which adds to the complexity and inconvenience.

Consequently, there exists a necessity for a comprehensive solution that mitigates the drawbacks associated with the current digital receipt transmission techniques.

### SUMMARY

The present disclosure tackles the challenges inherent in existing digital receipt transmission approaches by introducing a highly efficient, secure, and universally implementable digital receipt transmission system and method, which reduces hardware expenditure, safeguards user privacy, streamlines the process for both users and merchants, and eliminates the need for multiple registrations across disparate programs or applications.

According to one aspect, a digital receipt generation and transmission system includes a cashier system, a receipt cloud application of a receipt cloud application server, a receipt cloud storage, a terminal, and a transaction processing network. The cashier system is configured to generate a digital receipt upon recording transaction-relevant information from selected items of a merchant, establish a connection with the receipt cloud application, and transmit a request for a unique link for the digital receipt. The cashier system then receives the unique link, generates a transaction data set according to a cash register protocol, incorporates the unique link into the transaction data set, and transmits the formatted transaction data set to the terminal. Upon receiving a transaction confirmation from the terminal after successful processing by the transaction processing network, the cashier system transmits the digital receipt to the receipt cloud application. The receipt cloud application is configured to receive the request for the unique link, generate the unique link based on a calculated individual hash value, transmit the unique link to the cashier system, receive the digital receipt if the transaction is successful, and store the digital receipt in the receipt cloud storage. The terminal is configured to transmit the transaction data set to the transaction processing network and transmit the transaction confirmation to the cashier system. The transaction processing network is configured to receive the transaction data set, process it, and make the unique link available to a user, enabling access to the digital receipt stored in the receipt cloud storage via the unique link.

The digital receipt generation and transmission system extends the function of existing payment service infrastructure while maintaining compliance for merchants and measurably reducing waste and CO₂ emissions. It integrates seamlessly with existing payment service infrastructure, minimizing implementation costs and facilitating smoother adoption for merchants.

The system ensures data economy and anonymity, eliminating the need for personal data of the user during transmission, and providing a more convenient and secure method compared to QR code-based alternatives. Merchants and users benefit from end-to-end digital transmission of digital receipts without the need for additional hardware.

The system's combination of unique links and cloud-based digital receipt processing safeguards transaction data and effectively prevents unauthorized access to the user's personal information, bolstering data privacy and security. By utilizing the well-established transaction processes between merchants and transaction processing systems for transmission of the unique link, the system further enhances security measures, providing an even more reliable and robust solution.

The system enables near real-time generation and transmission of digital receipts, satisfying the demand for direct and immediate transmission.

Digital receipts are generated and transmitted without requiring an active internet connection or a mobile phone on the user side, eliminating the reliance on mobile devices for digital receipt generation and transmission.

By streamlining the process steps of conventional cashless payments, this system increases effectiveness of digital receipt generation and transmission, without requiring additional hardware for merchants.

According to one aspect, the digital receipt may be directly accessible via the unique link and, wherein the unique link can be a URL comprising a unique hash value and a base URL, and points to the digital receipt stored in the receipt cloud storage. This configuration offers advantages, such as enhanced security due to the unique hash value, simplified access to digital receipts for users, and efficient retrieval of receipts, all while maintaining compatibility with existing transaction processing infrastructures.

According to one aspect, a cashier system is configured to generate a digital receipt upon recording transaction-relevant information from selected items of a merchant, establish a connection with a receipt cloud application, and transmit a request for a unique link for the digital receipt to the receipt cloud application. The cashier system then receives the unique link generated by the receipt cloud application, generates a transaction data set according to a cash register protocol, incorporates the unique link into the transaction data set, and transmits the formatted transaction data set to the terminal. Upon receiving a transaction confirmation from the terminal after successful processing by a transaction processing network, the cashier system transmits the digital receipt to the receipt cloud application for storage, wherein the stored digital receipt is accessible via the unique link.

According to one aspect, the cashier system may be configured to incorporate the unique link into a specific field of the transaction data set while conforming to data structure requirements of the cash register protocol. This enables seamless integration with various cash register protocols, ensuring compatibility across different systems, and facilitating efficient and accurate transmission of the unique link along with the transaction data set. This approach reduces the likelihood of errors in data transmission and simplifies the overall process. The unique link is incorporated into the existing transaction process involving the cashier system, terminal, and TPN.

According to one aspect the cashier system can be further configured to in include an identifier before and/or after the unique link in the specific field of the transaction data set, and wherein the identifier is one of the following: a generic value, a name, a variable, a type function, or label, enhancing identifiability of the unique link in the transaction data set and allowing for flexibility and adaptability in different scenarios, thus improving overall system adaptability and ease of integration.

According to one aspect, the transaction processing network may be further configured to process the transaction data set by identifying the identifier and the unique link in the transaction data set, and extracting the unique link from the transaction data set thereby enhancing speed for identifying the unique link and reducing the risk of errors.

According to one aspect, the transaction processing network may be configured to make the unique link available to the user by: sending a notification to the user that contains the unique link; or incorporating the unique link along with the transaction-relevant information from the transaction data set into an account statement.

According to one aspect, the connection can be a secure connection and the cashier system can be configured to transmit the digital receipt to the receipt cloud application in a compressed, encrypted, or encoded format, enhancing data security and minimizing storage requirements, which reduces bandwidth usage and storage costs.

According to one aspect, the receipt cloud application may be further configured to provide receipt organization, expense tracking, or an integration with accounting or financial management software, providing users with a comprehensive solution for managing their digital receipts, which in turn can lead to improved financial management and streamlined business operations.

According to one aspect, the terminal in the digital receipt transmission system can be a point-of-sale (POS) terminal, a self-checkout terminal, a mobile terminal, a software/ mPOS terminal, or an electronic payment terminal, offering compatibility with various transaction-processing devices, which allows for seamless integration with existing payment infrastructures.

According to one aspect, the receipt cloud application can use a distributed ledger technology for storing digital receipts, ensuring enhanced security, transparency, and reliability in data storage.

According to one aspect, the receipt cloud application may provide an application programming interface (API) that enables integration with third-party applications, services, or platforms, providing users with a customizable and expandable solution, and promoting the development of innovative applications and services.

According to one aspect, the receipt cloud application can be configured to automatically categorize and sort digital receipts based on predefined or user-defined criteria, such as store name, product category, or purchase date, facilitating efficient organization and management of receipts, which can improve user productivity and simplify financial recordkeeping.

According to one aspect, a computer-implemented method for digital receipt generation and transmission comprises the following steps: recording transaction-relevant information from selected items of a merchant by a cashier system; generating a digital receipt corresponding to the transaction-relevant information by the cashier system; establishing a connection between the cashier system and a receipt cloud application of a receipt cloud application server by the cashier system; transmitting a request for a unique link for the digital receipt to the receipt cloud application via the connection by the cashier system; receiving the request from the cashier system by the receipt cloud application; generating the unique link based on a calculated individual hash value by the receipt cloud application; transmitting the unique link to the cashier system via the connection by the receipt cloud application; receiving the unique link from the receipt cloud application by the cashier system; generating a transaction data set for the transaction-relevant information according to a cash register protocol by the cashier system; incorporating the unique link into the transaction data set by the cashier system; transmitting the transaction data set comprising the transaction-relevant information and the unique link to a terminal by the cashier system; receiving the transaction data set by the terminal; transmitting the transaction data set to a transaction processing network by the terminal; transmitting a transaction confirmation to the cashier system upon successful processing of a transaction amount included in the transaction data set by the transaction processing network by the terminal; receiving the transaction confirmation by the cashier system; transmitting the digital receipt to the receipt cloud application via the connection upon reception of the transaction confirmation by the cashier system; receiving the digital receipt by the receipt cloud application; storing the digital receipt in a receipt cloud storage by the receipt cloud application; and processing the transaction data set and making the unique link available to a user by the transaction processing network, wherein the digital receipt stored in the receipt cloud storage is accessible via the unique link.

According to one aspect, a computer program comprises program code, wherein the program code, when executed by a computer system, is configured to perform the steps of the method.

According to another aspect, a computer-readable medium has stored thereon the computer program.

### BRIEF DESCRIPTION OF THE DRAWINGS

The foregoing summary and the following detailed description of preferred embodiments will be more readily understood if read in conjunction with the accompanying drawings. To illustrate the concept, the drawings show exemplary details of the embodiments described. The information shown in the drawings is exemplary and explanatory only and does not limit the claimed subject-matter.

The present disclosure is described in detail below with reference to the accompanying drawings:
Fig. 1 is a block diagram illustrating a standard payment transaction system in a 4-party-model.
Fig. 2 is a block diagram illustrating a transaction procedure in the standard payment transaction system of Fig. 1.
Fig. 3 is a block diagram illustrating a digital receipt generation and transmission system according to the present disclosure.
Fig. 4 is a block diagram illustrating a digital receipt generation and transmission procedure in the digital receipt generation and transmission system of Fig. 3.

### DETAILED DESCRIPTION

The present disclosure provides a digital transmission path of digitized receipts while preserving the identity of the user anonymous.

The following entities are distinguished:
**User:** Purchaser of a good or service by means of cashless payment, e.g. consumer.
**Merchant:** Seller of a good or service who accepts cashless payment, e.g. store.
**Cashier system:** Merchant's electronic recording system for managing transactions and generating digital receipts.
**Cash register protocol:** Set of rules for procedures for data transmission between the cashier system and other devices, such as a terminal, to exchange information and structure how the cashier system and other devices send and receive it. Popular protocols include, but are not limited to: JPOS, OPOS, POS.net, Unified POS, ZVT, Nexo protocol, and others.
**Terminal:** Card reader for processing cashless payments at the point of sale (POS).
**Digital Receipt:** Digitized receipt of the cashless transaction in accordance with the receipt requirement in the respective member country. The published Digital Receipt is displayed in a generally accessible file format.
**Receipt Cloud Application:** Cloud-based application of a server that receives data and requests from cashier systems and provides unique links.
**Receipt Cloud Storage:** Cloud storage for securing, storing and making available the digital receipts.
**Transaction Data Set:** Digital file containing transaction data necessary to settle cashless payments between parties involved in the transaction.
**Merchant Payment Service Provider (PSP):** Contractual partner of the merchant who accepts cashless payments and initiates payment transactions (e.g. acquirer).
**Transaction Processing Network (TPN):** The transaction processing network encompasses the entire infrastructure and multiple systems involved in facilitating transactions, including the transaction processing systems (TPS). The TPN consists of various entities, such as payment gateways, payment processors, acquiring banks, issuing banks, and other financial institutions, which are interconnected to enable seamless and secure transaction processing. The TPN provides a framework for communication, data exchange, and coordination between these entities to ensure smooth and efficient transaction execution. The infrastructure varies depending on the payment scheme.
**Transaction Processing System (TPS):** A transaction processing system refers to a system that handles and manages individual transactions, such as payments or fund transfers, within a larger network. It is responsible for processing transaction data, including authorization, authentication, confirmation, clearing and settlement of the transaction. The TPS ensures that transactions are completed accurately, securely, and efficiently, complying with the specific requirements of the payment method or financial service being used.
**Bank Statements:** Overview of cashless payments of the user, provided by the TPS, e.g. the user's bank of the transaction processing network.
**Unique Link:** Unique hyperlink that points to the digital receipt in the receipt cloud storage and calls up the digital receipt when entered in an internet browser (e.g., TinyURL, Hyperlink). The unique link is unique per digital receipt; a distinct receipt can only have one link.
**Identifier:** A generic value, name, variable, type function, or label. The purpose of the identifier is to allow the transaction processing network to identify unique links that reference digital receipts despite variable formatting of the information in the transaction data set. The cashier system assigns at least one identifier to the unique link received by the Receipt Cloud Application when implementing the unique link into the transaction data set.
**Payment Scheme:** The payment method used by the user for their transaction. Cashless payment schemes are used for the presented procedure; e.g., credit cards, national debit procedures, other payment methods.

The majority of payment transactions are processed in 3-Party or 4-Party-Models. The procedure for anonymized transmission of digitized cash receipts according to this disclosure is applicable for both models. For exemplary reasons and to provide a better delimination, this document demonstrates the procedure in the 4-Party-Model, which applies to credit and debit card payments of large card schemes such as Girocard, AMEX, VISA or Mastercard.

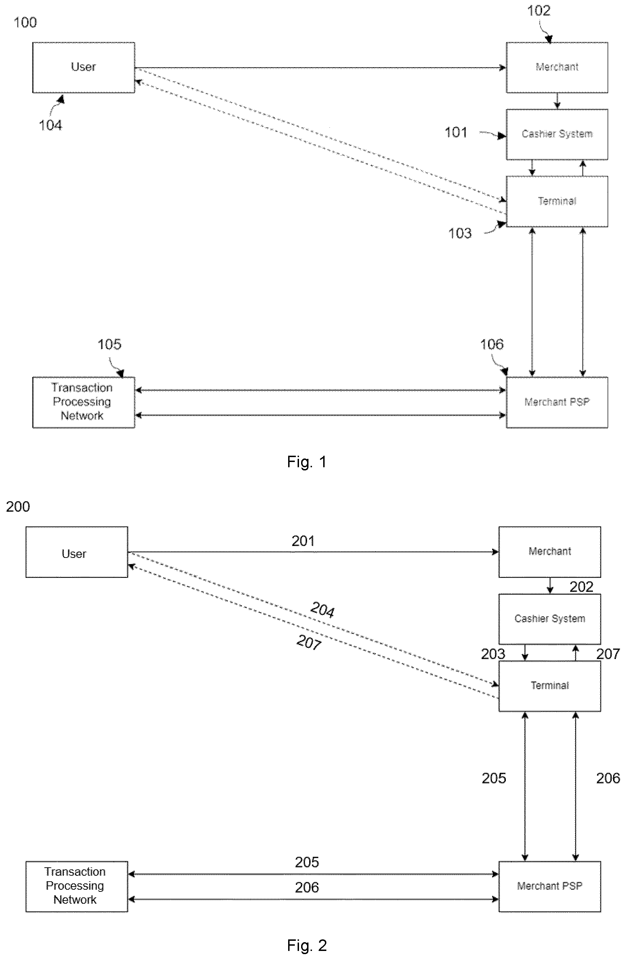

**Fig. 1** shows a standard transaction data transmission system 100 for card transactions within the 4-Party-Model, which is prevalent among major card schemes. This is an example system used in general for cashless transactions.

The standard transaction data transmission system **100** comprises the following entities:
The cashier system **101,** which is an electronic transaction management module employed by the merchant **102** that oversees the administration, execution, and record-keeping of cashless payment transactions. The cashier system **101** generates a digital receipt, generates a transaction data set, and communicates with the terminal **103** using a cash register protocol.

The terminal **103** is a point-of-sale (POS) device that enables secure and seamless interactions between the user **104,** merchant **102,** and the transaction processing network **105** during the transaction process. The terminal **103** is responsible for receiving the transaction data set from the cashier system **101,** obtaining the user's authorization, and exchanging messages with the transaction processing network **105** for pre-authorization, payment requests, and final confirmation.

The merchant payment service provider (PSP) **106** is a third-party service that processes payment transactions on behalf of the merchant **102.** The PSP **106** enables communication between the terminal **103** and the transaction processing network **105** by processing and routing the transaction data set and authorization messages through relevant intermediaries.

The transaction processing network's **105** responsibilities comprise managing the user's account and authorizing or rejecting payment requests during the transaction process, for clearing and settlement. The transaction processing network **105** receives pre-authorization and payment requests in the form of the transaction data set, assesses the validity and availability of funds, and communicates its decision through the PSP and other intermediaries to the terminal **103.**

**Fig. 2** is a block diagram outlining a standard card transaction process **200** in the standard transaction data transmission system of **Fig. 1** ranging from the user's initial purchase to the terminal's verification of accurate payment processing.

The process steps in a regular card transaction of the 4-Party-Model are as follows:

The user engages **201** in a transaction e.g. by choosing products or services for purchase at the merchant's establishment.

Following the user's selection, the merchant's cashier system captures **202** the transaction-relevant information, such as item details, transaction amount, and timestamp. Subsequently, the cashier system generates a receipt, and, in numerous scenarios, outputs a printed hard copy for the user's records.

The cashier system generates a transaction data set comprising the transaction-relevant information and transmits **203** the transaction data set to the terminal according to a cash register protocol.

A cash register protocol is a set of rules and procedures for the transmission of transaction-relevant data between a cashier system and other devices, such as a terminal or point-of-sale (POS) system. The protocol governs how transaction data are exchanged, formatted, and sent between these systems. This enables seamless communication between the systems. Examples of cash register protocols include JPOS, OPOS, POS.net, Unified POS, ZVT, Nexo protocol, and others.

The transaction data set is a structured collection of transaction-relevant information generated by the cashier system and transmitted to the terminal according to the cash register protocol. The structure of a transaction data set includes elements such as:
Transaction amount: The total cost of the goods or services being purchased.
Timestamp: The date and time of the transaction.
Payment method: The type of payment used for the transaction, e.g., credit card, debit card, or other cashless payment methods.
Merchant information: Details about the merchant, such as store name, location, and identification number.
Terminal ID: A unique identifier for the terminal involved in the transaction.
Transaction ID: A unique identifier for the specific transaction.

The exact structure and fields included in the transaction data set may vary depending on the cash register protocol, payment method, and merchant requirements.

The user authorizes **204** the transaction at the terminal in the standard procedure for his payment scheme, e.g. by holding a card and possibly performing a two-factor authentication (e.g. PIN). It should be noted that authorization requests may vary depending on the payment scheme, with credit card transactions typically requiring authorization, while other schemes might follow different procedures.

The terminal sends **205** an pre-authorization as request via Merchant PSP and other intermediaries to a transaction processing system of the transaction processing network. The transaction processing system returns an authorization or a rejection to the terminal via Merchant PSP and further intermediaries. The process ends in case the authorization fails.

Is the pre-authorization successful and not failed, the terminal transmits **206** a payment request in form of the transaction data set via Merchant PSP and further intermediaries to the transaction processing network. The transaction processing network returns a confirmation or a rejection via Merchant PSP and further intermediaries to the terminal. The process ends in case of a rejection.

The terminal confirms **207** the proper processing of the payment (1) visually via a display to the User and (2) optionally via the cashier system protocol to the merchant.

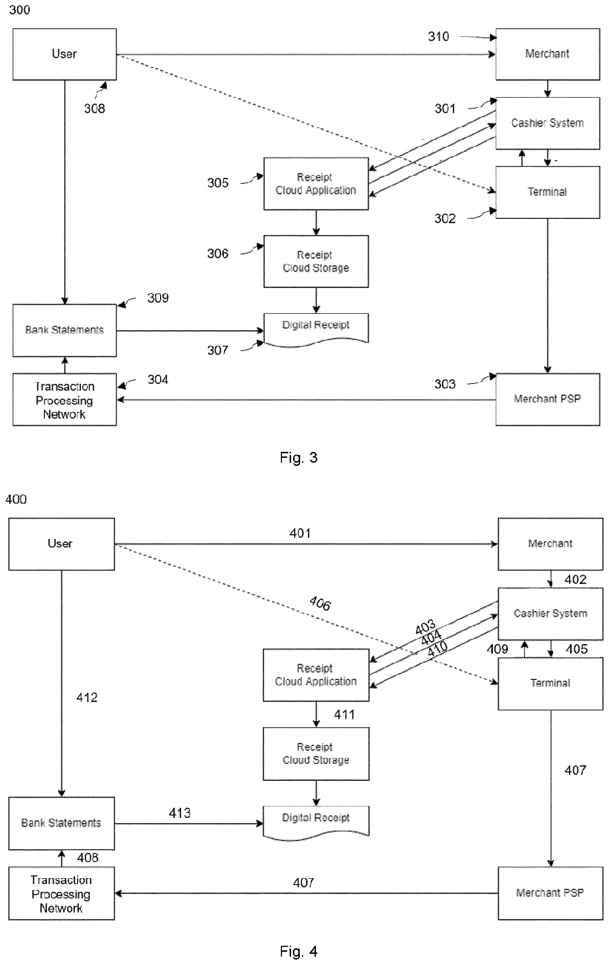

**Fig. 3** shows an embodiment of this disclosure for an anonymous digital receipt generation and transmission system **300,** which is based on the standard transaction data transmission system of **Fig. 1** (4-Party-Model). It is applicable to cashless transaction schemes.

The enhanced digital receipt generation and transmission system **300** incorporates the same components as the standard transaction data transmission system depicted in **Fig. 1****.** These components include a cashier system **301,** a terminal **302,** a merchant PSP **303,** and a transaction processing network **304.**

In addition to said system components, the enhanced system also incorporates a receipt cloud application **305** of a receipt cloud application server and a receipt cloud storage **306** to enable the storage, and retrieval of digital receipts **307.** The digital receipts **307** can be retrieved by the user **308** using a unique link for the digital receipt provided in the bank statement **309** for the transaction or purchase made at the merchant **310.**

In this embodiment, the cashier system **301** is further configured to generate digital receipts, establish a connection with the receipt cloud application **305,** and transmit a request for a unique link to the receipt cloud application **305.** Upon receiving the unique link, the cashier system **301** incorporates it into the transaction data set, adhering to the cash register protocol requirements, and transmits the transaction data set containing the unique link to the terminal **302.** Additionally, the cashier system **301** is configured to upload the digital receipt to the receipt cloud application **305** once the transaction has been authorized by the terminal **302.** Preferably, the connection established between the cashier system **301** and the receipt cloud application **305** is a secure connection, which can be achieved through various methods, such as: Secure Sockets Layer (SSL), Transport Layer Security (TLS), Virtual Private Networks (VPNs), and/or IPsec (Internet Protocol Security).

The receipt cloud application **305** is a cloud-based platform configured to manage the storage and retrieval of digital receipts. It is also configured to provide the unique links upon request from the cashier system and to enable access to the corresponding digital receipts. The receipt cloud storage **306** is a secure, cloud-based storage that holds digital receipts, enabling access to them via the unique links provided by the receipt cloud application **305.**

The transaction processing network **304** is responsible for processing cashless transactions by receiving payment requests in the form of transaction data sets, including unique links for digital receipts. It is configured to process the transaction data set containing the unique link to the digital receipt and to make this information available to the user or user through any of the following options:
**Bank statements:** Integrating the unique link into the user's bank statements, allowing them to easily access their digital receipts directly from their statements.
**Email notifications:** Sending an email notification to the user containing the unique link, enabling them to view and manage their digital receipts from their email inbox.
**Mobile app notifications:** Delivering a push notification to the user's mobile device with the unique link, allowing for quick and easy access to the digital receipt through a dedicated app or mobile banking platform.
**SMS notifications:** Sending an SMS message to the user's mobile phone number with the unique link, providing a convenient way to access the digital receipt.
**Online banking portals:** Incorporating the unique link into the user's online banking portal, enabling them to view and manage their digital receipts alongside their other financial information.

This configuration enables a seamless integration of digital receipts into the existing transaction processing infrastructure.

**Fig.4** shows a process for generation and transmission of digital receipts within the digital receipt generation and transmission system of **Fig. 3****.** The procedure can be applied to both 3-Party and 4-Party Models.

The steps of the process **400** are as follows:

The user engages **401** in a transaction e.g. by choosing products or services for purchase at the merchant's establishment.

Once the user has made their selection, the merchant's cashier system records 402 the relevant transaction information. This information is typically obtained from the merchant's Point of Sale (POS) system or inventory management system, which contains detailed information about the products and services available for purchase. The captured information includes item details (e.g., product names, quantities, and individual prices), the total transaction amount, and a timestamp indicating the date and time of the transaction. This comprehensive data forms the basis for generating the digital receipt and processing the payment.

The cashier system initiates and establishes a connection between the cashier system and the receipt cloud application, and once the connection is established, the cashier system requests **403** a unique link from the receipt cloud application via the secure connection. Preferably, the connection is a secure connection, such as Secure Socket Layer (SSL), Transport Layer Security (TLS), or Secure Shell (SSH).

Upon receiving the request from the cashier system, the receipt cloud application generates a unique link and transmits **404** it to the cashier system via the established connection. The unique link, which is preferably a URL composed of a unique hash value and a base URL, enables direct access to the digital receipt stored in the receipt cloud storage. This unique link is specifically designed to be associated with a single digital receipt, ensuring its exclusivity and security.

To achieve this exclusivity, the receipt cloud application may employ techniques such as calculating individual hash values for each unique link, which facilitates the precise and secure association of the unique link with its corresponding digital receipt.

The cashier system, upon receiving the unique link from the receipt cloud application, proceeds to generate a transaction data set. This data set incorporates both the transaction-relevant information, such as transaction amount, and timestamp, as well as the unique link. Once the transaction data set is fully formed, the cashier system transmits **405** it to the terminal.

The step of generating the transaction data set adheres to the steps outlined in the context of **Fig. 1****.** Additionally, this generation process includes the step of integrating the unique link into the transaction data set by the cashier system.

The unique link is inserted in a place or field of the transaction data set under consideration of the cashier register protocol requirements. This place or field must be formatted with sufficient characters and letters according to the protocol to transport the link completely. The place or field can vary in dependence to the cashier system protocol.
a. An exemplary field can be the field: 3C<additional-data> in the ZVT protocol with a LLLVAR encoding and variable length
b. An exemplary unique link can be described in URL standard as:
   //<receipt-link>: http://receipt-link.com/XXXXXXXXXXXXXXX
   where the term <receipt-link> represents the identifier
   where the term http://receipt-link.com/ represents the URL
   where the term XXXXXXXXXXXXXXX represents a unique hash value

Preferably, the cashier system also inserts or places an identifier before or after the unique link in the transaction data set, which later in the process allows the transaction processing network to identify and display the link correctly. The cashier system may also place one identifier before the unique link and another identifier after the unique link.

The identifier is a specific code or marker that is inserted before or after the unique link in the transaction data set. Its primary function is to help the transaction processing network and the TPS to recognize and correctly display the unique link within the transaction data set.

When the transaction processing network receives the transaction data set, it scans for the identifier, which signals the presence of the unique link. Once the identifier is detected, the transaction processing network can extract the unique link and display it appropriately, for example, in the user's account statement or through a notification. This ensures that the unique link is properly presented and made accessible to the user, allowing them to retrieve their digital receipt.

In addition to the aforementioned steps, process **400** encompasses the subsequent operations detailed below:

The terminal receives the transaction data set. The terminal does not make amendments to the transaction data set.

The user authorizes **406** the transaction at the terminal according to the standard procedure outlined in the context of **Fig. 2** for the payment scheme used, e.g. by holding a card and possibly performing a two-factor authentication (e.g. PIN). In case of an authorization failure for any reason or any process abortion from other reasons, the unique link is discarded by the cashier system. The authorization procedure depends on the payment scheme used.

Upon successful authorization, the terminal transmits **407** a payment request in form of the transaction data set to the transaction processing network according to the procedure outlined in **Fig. 2****.** In addition to the transaction data set of **Fig. 2****,** which comprises the transaction-relevant information, the transaction data set according to this embodiment further comprises the unique link.

The transaction data set is processed, passing through intermediate instances like the merchant PSP before finally being submitted to the transaction processing network. In contrast to a regular cashless transaction, the transaction data set also contains the unique link to the digital receipt. As the transaction is processed in near real-time, the unique link is provided to the transaction processing network within the transaction data set almost instantaneously. Alongside other information, such as the merchant's name or the transaction amount, the unique link is included in the data provided to the user for example through the user's bank statements.

Upon receiving the transaction data set, the transaction processing network performs several tasks. First, it validates the payment request by checking the transaction details, such as the card information, transaction amount, and merchant details, which is performed based on the standard transaction procedure of **Fig. 2****.** Once the payment request is confirmed as valid it sends a confirmation via merchant PSP to the terminal and proceeds to extract the unique link. Extracting the unique link may be based on identifying the identifier in the transaction data set as previously outlined. The unique link is then made available to the user.

Preferably, the unique link is extracted alongside the relevant-transaction information from the transaction data set. The system then verifies the integrity of the unique link and incorporates **408** it into the user's transaction record or account statement. This ensures the unique link is accurately displayed within the bank statement alongside other transaction details, adhering to the bank's security protocols and data management practices.

The terminal receives the confirmation message from the transaction processing network (via the Merchant PSP) and confirms **409** the successful transaction to the cashier system, for example by sending a confirmation message to the cashier system, indicating that the transaction has been completed and authorized. The entire transaction confirmation process between terminal and transaction processing network follows the standard transaction process outlined in **Fig. 2****.**

Upon confirmation of the transaction, the cashier system transmits **410** the digital receipt to the receipt cloud application via the connection using the unique link which was previously requested for the transaction. The unique link at this point serves as an identifier and access point for the specific digital receipt, ensuring that the receipt is correctly associated with the corresponding transaction and securely stored in the receipt cloud application. The digital receipt may be compressed, encrypted, or encoded when transmitted to the receipt cloud application.

The receipt cloud application receives the digital receipt and processes it to ensure compatibility with the cloud storage format. After processing, the application securely stores **411** the digital receipt in the receipt cloud storage, indexing it using the unique link as a reference. The digital receipt stored in the receipt cloud storage is associated with the unique link. This enables efficient retrieval and access to the digital receipt when needed. The unique link is typically represented by a URL with an embedded unique hash value.

The digital receipt may be stored in the receipt cloud storage for a predefined retention period. By doing so, the receipt cloud application automatically manages the deletion of expired digital receipts, reducing the storage space required and ensuring compliance with various regulations related to data retention.

In one embodiment, the receipt cloud application employs distributed ledger technology, such as blockchain, to store the digital receipts. A blockchain is a decentralized, tamper-resistant digital ledger that records transactions across a network of computers. Each block in the chain contains a set of digital receipts, and these blocks are linked together using cryptographic hash values, ensuring the integrity and immutability of the stored data.

By using distributed ledger technology, the receipt cloud application enhances the security and transparency of the digital receipt storage process. Each digital receipt is stored as a separate record in the ledger, and the unique link serves as a key for locating and retrieving the receipt. As the ledger is decentralized, it offers increased resilience against data loss and tampering, ensuring the long-term availability and accuracy of the digital receipts.

Furthermore, the use of a blockchain ledger allows for the verification of the digital receipt's authenticity and provenance. The digital receipt's transaction history is permanently recorded in the ledger, making it simple for users to trace the receipt's origin and verify its legitimacy. This feature is especially useful in situations where disputes arise or when verifying the transaction's authenticity is critical.

To access the digital receipt, the user utilizes the unique link provided. The process for accessing the digital receipt involves the steps, as outlined below:

The user accesses **412** the unique link for example in the bank statement and uses the unique link to access **413** the digital receipt in the receipt cloud storage. The user accesses 412 the unique link, for example, in the bank statement or through other means provided by the transaction processing network, such as email notifications, mobile banking apps, or online banking platforms. The unique link serves as a gateway to access **413** the digital receipt in the receipt cloud storage.

The unique link, when clicked or entered into a web browser, sends a request to the receipt cloud application, which in turn retrieves the associated digital receipt from the receipt cloud storage. The digital receipt is then securely displayed to the user, enabling them to review the transaction details, save, or print the receipt as needed.

Depending on the implementation of the unique link by the TPN, the customer can (1) only see the link in the systems of the bank, (2) copy the link to insert it separately into an internet browser, (3) click on a link in case the link is formatted in a way that allows to click the link within the bank's systems (4) access the digital receipt directly in case the bank has implemented a process that would make the digital receipt available within the systems of the bank or (5) by any other process that grants access to the digital receipt.

In another embodiment, via the unique link, the user is directed to the digital receipt hosted on the receipt cloud application's platform. The platform may provide an interface that displays the digital receipt, along with its transaction details, itemized list of purchases, and other relevant information.

The unique link can also be used to access additional features and functionalities, depending on the implementation of the receipt cloud application. These may include the ability to:
Download or save the digital receipt as a PDF or other file formats for record-keeping or sharing purposes.
Print the digital receipt if a physical copy is required.
Export the transaction data to personal finance management software or apps.
Track and manage expenses or spending habits over time.
Verify the authenticity of the digital receipt or trace its transaction history using the blockchain ledger, as mentioned in the previous paragraph.
Access additional information about the purchased items, such as warranties, user manuals, or product support.

In one embodiment, the receipt cloud application offers integration with popular accounting or financial management software, such as QuickBooks, Xero, or Mint. This integration enables users to export transaction data from their digital receipts directly into their preferred financial management platform, streamlining their bookkeeping process and ensuring accurate record-keeping. Integration with such software may also allow users to generate reports, track tax deductions, and manage invoicing and payments more efficiently.

In a further embodiment, the receipt cloud application implements an application programming interface (API) that leverages state-of-the-art communication protocols, data serialization formats, and security measures to facilitate seamless and efficient integration with third-party applications, services, or platforms.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include instructions for a programmable processor, and can be implemented in a high-level procedural and/or object-oriented programming language, and/or in assembly/machine language. As used herein, the term "computer-readable medium" refer to any computer program product, non-transitory computer readable medium, apparatus and/or device (e.g., magnetic discs, optical disks, memory, Programmable Logic Devices (PLDs)) used to provide instructions and/or data to a programmable processor, including a computer-readable medium that receives instructions as a computer-readable signal. The term "computer-readable signal" refers to any signal used to provide instructions and/or data to a programmable processor.

The systems, methods, processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A number of implementations have been described. Nevertheless, it will be understood that various modifications may be made without departing from the spirit and scope of the disclosure. Accordingly, other implementations are within the scope of the following claims.

## Claims

1. Digital receipt generation and transmission system, comprising:
a cashier system;
a receipt cloud application of a receipt cloud application server;
a receipt cloud storage;
a terminal;
a transaction processing network;
wherein the cashier system is configured to:
generate a digital receipt in response to recording transaction-relevant information from selected items of a merchant;
establish a connection between the cashier system and the receipt cloud application of a receipt cloud application server;
transmit a request for a unique link for the digital receipt to the receipt cloud application via the connection;
receive the unique link from the receipt cloud application via the connection;
generate a transaction data set for the transaction-relevant information according to a cash register protocol;
incorporate the unique link into the transaction data set;
transmit the formatted transaction data set comprising the transaction-relevant information and the unique link to the terminal;
receive a transaction confirmation from the terminal upon successful processing of the transaction amount included in the transaction data set by the transaction processing network; and
transmit the digital receipt to the receipt cloud application via the connection upon reception of the transaction confirmation from the terminal;
wherein the receipt cloud application is configured to:
receive the request for the unique link for the digital receipt from the cashier system;
generate the unique link based on a calculated individual hash value upon reception of the request from the cashier system;
transmit the unique link to the cashier system via the connection;
receive the digital receipt from the cashier system if the transaction is successful;
store the digital receipt in the receipt cloud storage;
wherein the terminal is configured to:
transmit the transaction data set to the transaction processing network, TPN; and
transmit to the cashier system the transaction confirmation; and
wherein the transaction processing network, TPN, is configured to:
receive the transaction data set from the terminal; and
process the transaction data set and make the unique link available to a user, wherein the digital receipt stored in the receipt cloud storage is accessible via the unique link.

2. Digital receipt generation and transmission system of claim 1, wherein the digital receipt stored in the receipt cloud storage is directly accessible via the unique link and, wherein the unique link is a uniform resource locator, URL, comprising a unique hash value and a base URL and points to the digital receipt stored in the receipt cloud storage.

3. Digital receipt generation and transmission system of any one of claims 1 or 2, wherein the cashier system is further configured to
incorporate the unique link into a specific field of the transaction data set while conforming to data structure requirements of the cash register protocol.

4. Digital receipt generation and transmission system of claim 3, wherein the cashier system is further configured to place a first identifier before the unique link in the specific field of the transaction data set and/or a second identifier after the unique link in the specific field of the transaction data set, and wherein the first identifier and the second identifier is one of the following: a generic value, a name, a variable, a type function, or label.

5. Digital receipt generation and transmission system of any one of claims 3 or 4, wherein the transaction processing network, TPN, to process the transaction data set is further configured to:
identify the first identifier and/or the second identifier and the unique link in the transaction data set; and
extract the unique link from the transaction data set.

6. Digital receipt generation and transmission system of any one of the preceding claims, wherein the transaction processing network, TPN, is configured to make the unique link available to the user by:
sending a notification to the user that contains the unique link; or
incorporating the unique link along with the transaction-relevant information from the transaction data set into an account statement.

7. Digital receipt generation and transmission system of any one of the preceding claims, wherein the connection is a secure connection and the cashier system is configured to transmit the digital receipt to the receipt cloud application in a compressed, encrypted, or encoded format.

8. Digital receipt generation and transmission system of any one of the preceding claims, wherein the receipt cloud application is further configured to provide receipt organization, expense tracking, or an integration with accounting or financial management software.

9. Digital receipt generation and transmission system of any one of the preceding claims, wherein the terminal is a point-of-sale, POS, terminal, a self-checkout terminal, a mobile terminal, a software/mPOS terminal or an electronic payment terminal.

10. Digital receipt generation and transmission system of any one of the preceding claims, wherein the receipt cloud application uses a distributed ledger technology to store the digital recei pt.

11. Digital receipt generation and transmission system of any one of the preceding claims, wherein the receipt cloud application provides an application programming interface, API, that enables integration with third-party applications, services, or platforms.

12. Digital receipt generation and transmission system of any one of the preceding claims, wherein the receipt cloud application is configured to automatically categorize and sort digital receipts based on predefined or user-defined criteria, such as store name, product category, or purchase date.

13. Computer-implemented method for digital receipt generation and transmission comprising the steps of:
recording by a cashier system transaction-relevant information from selected items of a merchant;
generating by the cashier system a digital receipt corresponding to the transaction-relevant information;
establishing by the cashier system a connection between the cashier system and a receipt cloud application of a receipt cloud application server;
transmitting by the cashier system a request for a unique link for the digital receipt to the receipt cloud application via the connection;
receiving by the receipt cloud application the request from the cashier system;
generating by the receipt cloud application the unique link based on a calculated individual hash value;
transmitting by the receipt cloud application the unique link to the cashier system via the connection;
receiving by the cashier system the unique link from the receipt cloud application;
generating by the cashier system a transaction data set for the transaction-relevant information according to a cash register protocol;
incorporating by the cashier system the unique link into the transaction data set;
transmitting by the cashier system the transaction data set comprising the transaction-relevant information and the unique link to a terminal;
receiving by the terminal the transaction data set;
transmitting by the terminal the transaction data set to a transaction processing network, TPN;
transmitting by the terminal a transaction confirmation to the cashier system upon successful processing of a transaction amount included in the transaction data set by the transaction processing network, TPN;
receiving by the cashier system the transaction confirmation;
transmitting by the cashier system the digital receipt to the receipt cloud application via the connection upon reception of the transaction confirmation;
receiving by the receipt cloud application the digital receipt;
storing by the receipt cloud application the digital receipt in a receipt cloud storage;
processing by the transaction processing network, TPN the transaction data set and making the unique link available to a user, wherein the digital receipt stored in the receipt cloud storage is accessible via the unique link.

14. Computer program comprising program code, wherein the program code, when executed by a computer system, is configured to perform the steps of the method claim 13.

15. A computer-readable medium having stored thereon the computer program of claim 14.
